# EUROPEAN PATENT APPLICATION

(11) **EP 4 804 628 A1**
(43) Date of publication of application: **09.09.2026**
(21) Application number: 24884790.7
(22) Date of filing: 30.10.2024
(51) Int. Cl.: H04W 36/38

(54) **OPERATION EXECUTION METHOD AND APPARATUS, TERMINAL, AND NETWORK SIDE DEVICE**

(30) Priority: 02.11.2023 CN 202311450304
(71) Applicant: Vivo Mobile Communication Co., Ltd., Dongguan, Guangdong 523863 (CN)
(72) Inventor: PU, Wenjuan, Dongguan, Guangdong 523863 (CN); LI, Gen, Dongguan, Guangdong 523863 (CN); YANG, Xiaodong, Dongguan, Guangdong 523863 (CN)
(74) Representative: Studio Torta S.p.A.
(86) International application number: PCT/CN2024/128387
(87) International publication number: WO 2025/092788

(57) **Abstract**

The present application relates to the technical field of communications, and discloses an operation execution method and apparatus, a terminal, and a network side device. The method in an embodiment of the present application includes: a terminal receives target control signaling sent by a network side device; and determining, by the terminal, to execute a first operation in a case that the target control signaling meets a target condition, where the first operation includes at least one of the following: a conditional handover (CHO) operation, a conditional primary secondary cell (PSCell) change (CPC) operation; and a secondary cell (SCell) deactivation operation.

## Description

### CROSS-REFERENCE TO RELATED APPLICATIONS

The present application claims priority to Chinese Patent Application No. 202311450304.3, entitled "OPERATION EXECUTION METHOD AND APPARATUS, TERMINAL, AND NETWORK SIDE DEVICE" filed with the China National Intellectual Property Administration on November 2, 2023, which is incorporated by reference in its entirety.

### TECHNICAL FIELD

The present application belongs to the technical field of communications, and particularly relates an operation execution method and apparatus, a terminal, and a network side device.

### BACKGROUND

In a communication system, to reduce network energy consumption, a network may adopt some energy-saving measures, such as shutting down some cells in a case of low demand on communication services, or allowing some cells to enter a specific energy-saving mode (such as cell discontinuous transmission (Discontinuous Transmission, DTX) and/or discontinuous reception (Discontinuous Reception, DRX)). To further reduce signaling overheads, the network may send common signaling in a case of using network energy-saving technologies to trigger a plurality of terminals within the network to perform a conditional handover operation, a conditional primary secondary cell change (Conditional PSCell Change, CPC) operation, or a secondary cell deactivation operation. However, by considering that the same cell is a different cell from the perspective of different terminals, how the network accurately triggers different terminals to execute the conditional handover operation, the CPC operation or the secondary cell deactivation operation through common signaling is a problem to be solved.

### SUMMARY

Embodiments of the present application provide an operation execution method and apparatus, a terminal, and a network side device, which are able to solve the problem to accurately trigger different terminals to execute a conditional handover operation, a CPC operation or a secondary cell deactivation operation through common signaling.

In a first aspect, an operation execution method is provided, and includes:
receiving, by a terminal, target control signaling sent by a network side device; and
determining, by the terminal, to execute a first operation in a case that the target control signaling meets a target condition.

The first operation includes at least one of the following:
a conditional handover (CHO) operation;
a conditional primary secondary cell (PSCell) change (CPC) operation; and
a secondary cell (SCell) deactivation operation.

In a second aspect, an operation execution method is provided, and includes:
sending target control signaling by a network side device to a terminal.

In a case that the target control signaling meets the target condition, the target control signaling is used for determining to execute a first operation.

The first operation includes at least one of the following:
a conditional handover (CHO) operation;
a conditional primary secondary cell (PSCell) change (CPC) operation; and
a secondary cell (SCell) deactivation operation.

In a third aspect, an operation execution apparatus is provided, a terminal includes the operation execution apparatus, and the apparatus includes:
a receiving module, configured to receive target control signaling sent by a network side device; and
a first determining module, configured to determine to execute a first operation in a case that the target control signaling meets a target condition.

The first operation includes at least one of the following:
a conditional handover (CHO) operation;
a conditional primary secondary cell (PSCell) change (CPC) operation; and
a secondary cell (SCell) deactivation operation.

In a fourth aspect, an operation execution apparatus is provided, a network side device includes the operation execution apparatus, and the apparatus includes:
a sending module, configured to send target control signaling to a terminal.

In a case that the target control signaling meets the target condition, the target control signaling is used for determining to execute a first operation.

The first operation includes at least one of the following:
a conditional handover (CHO) operation;
a conditional primary secondary cell (PSCell) change (CPC) operation; and
a secondary cell (SCell) deactivation operation.

In a fifth aspect, a terminal is provided. The terminal includes a processor and a memory. The memory stores a program or an instruction capable of running on the processor, and the program or instruction is executed by the processor to implement the steps of the method in the first aspect.

In a sixth aspect, a network side device is provided, and includes a processor and a memory. The memory stores a program or an instruction capable of running on the processor, and the program or instruction, when executed by the processor, implements the steps of the method in the second aspect.

In a seventh aspect, a terminal is provided, and includes a processor and a communication interface. The communication interface is configured to receive target control signaling sent by a network side device.

The processor is configured to determine, by the terminal, to execute a first operation in a case that the target control signaling meets a target condition.

The first operation includes at least one of the following:
a conditional handover (CHO) operation;
a conditional primary secondary cell (PSCell) change (CPC) operation; and
a secondary cell (SCell) deactivation operation.

In an eighth aspect, a network side device is provided, and includes a processor and a communication interface. The communication interface is configured to send target control signaling to a terminal.

In a case that the target control signaling meets the target condition, the target control signaling is used for determining to execute a first operation.

The first operation includes at least one of the following:
a conditional handover (CHO) operation;
a conditional primary secondary cell (PSCell) change (CPC) operation; and
a secondary cell (SCell) deactivation operation.

In a ninth aspect, an operation execution system is provided, and includes a terminal and a network side device. The terminal may be configured to implement steps of the method in the first aspect, and the network side device may be configured to implement the steps of the method in the second aspect.

In a tenth aspect, a readable storage medium is provided. The readable storage medium stores a program or an instruction executed by a processor to implement the steps of the method in the first aspect or implement the steps of the method in the second aspect.

In an eleventh aspect, a chip is provided. The chip includes a processor and a communication interface, the communication interface is coupled to the processor, and the processor is configured to run a program or an instruction to implement the method in the first aspect or implement the method in the second aspect.

In a twelfth aspect, a computer program/program product is provided. The computer program/program product is stored in a storage medium, and the computer program/program product is executed by at least one processor to implement the steps of the method in the first aspect or implement the steps of the method in the second aspect.

In the embodiments of the present application, the terminal receives target control signaling sent by a network side device; and the terminal determines to execute a first operation in a case that the target control signaling meets a target condition. The first operation includes at least one of the following: a conditional handover (CHO) operation, a conditional primary secondary cell (PSCell) change (CPC) operation; and a secondary cell (SCell) deactivation operation. Therefore, the terminal triggers the first operation by determining whether the target control signaling meets the target condition or not, so that the network can accurately trigger different terminals through the target control signaling to execute the conditional handover operation, the CPC operation or the secondary cell deactivation operation.

### BRIEF DESCRIPTION OF THE DRAWINGS

FIG. 1 is a block diagram of an applicable wireless communication system in an embodiment of the present application.
FIG. 2 is a flowchart of an operation execution method provided by an embodiment of the present application.
FIG. 3 is another flowchart of an operation execution method provided by an embodiment of the present application.
FIG. 4 is a schematic structural diagram of an operation execution apparatus provided by an embodiment of the present application.
FIG. 5 is another schematic structural diagram of an operation execution apparatus provided by an embodiment of the present application.
FIG. 6 is a schematic structural diagram of a communication device provided by an embodiment of the present application.
FIG. 7 is a schematic structural diagram of a terminal provided by an embodiment of the present application.
FIG. 8 is a schematic structural diagram of a network side device provided by an embodiment of the present application.

### DETAILED DESCRIPTION

The technical solutions in embodiments of the present application will be clearly described below with reference to the accompanying drawings in the embodiments of the present application. Apparently, the described embodiments are merely some rather than all of the embodiments of the present application. All other embodiments obtained by a person of ordinary skill in the art based on the embodiments of the present application shall fall within the protection scope of the present application.

The terms such as "first", "second", etc. in the description and claims of the present application are used for distinguishing similar objects and not necessarily used for describing the particular order or sequence. It should be understood that the terms used may be interchangeable under appropriate circumstances, so that the embodiments of the present application may be implemented in a sequence other than those illustrated or described in the figures or by texts. In addition, the objects distinguished by "first" or "second" are generally objects of one type with the unlimited object quantity. For example, a first object may be one or multiple. In addition, "or" in this specification and the claims represents at least one of connected objects. For example, "A or B" covers three solutions, i.e., Solution 1: including A but excluding B; Solution 2: including B but excluding A; and Solution 3: including both A and B. The term "indication" in the specification and claims of the present application may be an explicit indication or an implicit indication. The explicit indication may be understood as that a sending party explicitly notifies a receiving party of an operation needing to be performed or a request result in the sent indication. The implicit indication may be understood as that the receiving party determines according to the indication sent by the sending party, and determines an operation needing to be performed or a request result according to a determination result.

It is worth pointing out that the technology described in the embodiments of the present application is not limited to a long term evolution (Long Term Evolution, LTE)/LTE-advanced (LTE-Advanced, LTE-A) system, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA) and other systems. The terms "system" and "network" in the embodiments of the present application are often used interchangeably, and the described technology may be applied to the systems and radio technologies mentioned above, and may also be applied to other systems and radio technologies. The following descriptions describe a new radio (New Radio, NR) system for illustrative purpose, and NR terminology is used in most of the following descriptions, but these technologies may also be applied to applications other than NR system applications, such as 6th (6^{th} Generation, 6G) communication systems.

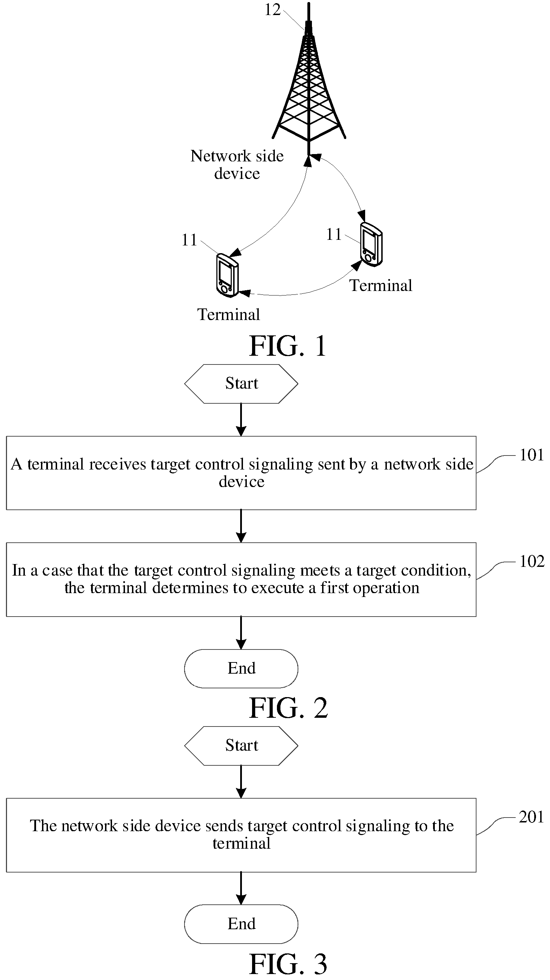

FIG. 1 is a block diagram of an applicable wireless communication system according to an embodiment of the present application. The wireless communication system includes a terminal 11 and a network side device 12. The terminal 11 may be a terminal side device such as a mobile phone, a tablet personal computer (Tablet Personal Computer), a laptop computer (Laptop Computer) which is also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), a smart home (a home device with a wireless communication function, for example, a refrigerator, a television, a washing machine, or furniture), a games console, a personal computer (personal computer, PC), a teller machine, and a self-service machine. The wearable device includes: a smartwatch, a smart band, a smart headset, smart glasses, smart jewelry (a smart bracelet, a smart chain bracelet, a smart ring, a smart necklace, a smart anklet, a smart ankle chain, etc.), a smart wrist strap, a smart garment, etc. It should be noted that, a specific type of the terminal 11 is not limited in the embodiments of the present application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point or a Wireless Fidelity (Wireless Fidelity, WiFi) node, etc. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a household node B, a household evolution node B, a transmitting receiving point (Transmitting Receiving Point, TRP) or some other appropriate terms in the belonged field provided that the same technical effect is achieved. The base station is not limited to specific technical vocabularies. It is to be noted that in the embodiments of the present application, the description is performed by only taking a base station in an NR system as an example, and a specific type of the base station is not limited.

For ease of understanding, some contents of the embodiments of the present application will be described hereafter.

### 1. network energy-saving

Network energy efficiency is listed as one of 13 performance requirements of IMT-2020. Most of power consumption of an NR network comes from a base station, and 90% of power consumption of an NR base station comes from an active antenna unit (Active Antenna Unit, AAU). Due to reasons such as higher frequency bands, wider bandwidth, and more transmitters and receivers (Transmitter&Receiver, TRX), the power consumption of a single NR base station is currently 3 to 4 times higher than that of LTE. In addition, in an aspect of operational expenditure (Operational Expenditure, OPEX), the electricity charge of the base station accounts for nearly 20% of the entire network operating cost. For some operators, the electricity charge accounts for more than half of total profits. Therefore, the network energy-saving of NR becomes more critical to realize great success of 5G. According to the actual load conditions, the base station may implement energy-saving measures of different degrees, such as base station shutdown, carrier/cell shutdown, channel shutdown, synchronization signal block (Synchronization Signal Block, SSB)/beam shutdown, antenna/panel turnoff, cell discontinuous transmission (Discontinuous Transmission, DTX) and/or discontinuous reception (Discontinuous Reception, DRX), and channel state information (channel state information, CSI) self-adaptation.

### 1.1 Cell DTX/DRX

User equipment (User Equipment, UE) may be configured with periodic Cell DTX/DRX patterns, including the active and non-active times of the cell, so that the base station may save network power consumption during the non-active period of the cell. The Cell DTX pattern and Cell DRX pattern may be independently configured. Each serving cell may be configured with cell DTX and/or DRX. In a case that a cell is configured with cell DTX, the UE does not monitor PDCCH and SPS during the non-active period on this cell. In a case that a cell is configured with cell DRX, the UE does not send a configured grant (Configured Grant, CG) or a scheduling request (Scheduling Request, SR) during the non-active period on this cell.

### 1.2 CHO enhancement

The related art relates to whether to enhance the existing conditional handover (CHO) process to consider the influence of the energy-saving mode of a source cell/target cell. The network may configure CHO for a connected-state terminal in advance (i.e., one or more candidate target cells and corresponding access configuration information). When the source cell needs to enter the network energy-saving state (for example, the source cell is shut down, or the source cell enables cell DTX/DRX), L1 group common signaling is sent to trigger a plurality of pieces of UE to execute conditional handover. When the connected-state terminal under the source cell is handed over to the candidate target cell, the source cell may save the energy or reduce the influence of network energy-saving on some pieces of UE. The source cell is a primary cell before the terminal handover, and the target cell is a primary cell after the terminal handover.

### 2. Conditional handover (Conditional Handover, CHO)

Conditional handover refers to the handover executed by the terminal when a handover execution condition is met. Main steps are as follows:
Step 0: UE reports a measurement report.
Step 1: The source base station determines to use the CHO. The source base station sends a handover request message to one or more candidate base stations to request to configure a plurality of candidate cells.
Step 2: The source base station receives a handover request response message, including configuration information for one or more candidate cells.
Step 3: The source base station sends an RRC reconfiguration message to the UE, including CHO configuration. The CHO configuration includes configuration information for the candidate target cell and a corresponding execution condition.
Step 4: After receiving the CHO configuration, the terminal starts evaluation for the execution condition of each candidate target cell, and sends an RRC reconfiguration completion message to the source base station.
Step 5: If all measurement identifiers (Measurement Identifier, MeasId) of a candidate target cell satisfy corresponding events (for example, an event A3 or an event A5), the UE considers the candidate target cell as a triggered cell. The UE automatically determines a selected cell (selected cell) in the triggered cells, and executes conditional handover on the cell. Specifically, the terminal uses a radio resource control (Radio Resource Control, RRC) reconfiguration message of the cell, initiates random access on the cell, and sends an RRC reconfiguration completion message to the cell. When the terminal starts to establish synchronization with the cell, the terminal stops monitoring the source cell. After executing the handover, the terminal stops condition evaluation, and releases the CHO configuration.
Step 6: The target base station notifies the source base station that the handover of the terminal is succeeded.
Step 7: The source base station notifies other candidate base stations that the handover is canceled.

About CHO configuration:
The CHO configuration includes the configuration information for a plurality of candidate target cells. Specifically, the network side configures the execution condition and an RRC reconfiguration message for each candidate target cell, which is identified by a CHO identifier (Identifier, ID). The execution condition consists of 1 or 2 measIds. The measId corresponds to a measId in a radio resource management (Radio resource management, RRM) measurement configuration (measConfig). That is, the UE may obtain a trigger condition (Cond trigger event) corresponding to the measId according to the measId and the measConfig. The Cond trigger event includes the following events:
Event A3 (Event A3): It indicates that the quality of an intra-frequency or inter-frequency neighbor cell is one offset higher than the quality of a serving cell.
Event A4 (Event A4): It indicates that the quality of an inter-frequency neighbor cell is higher than a threshold.
Event A5 (Event A5): It indicates that the quality of a serving cell is lower than a threshold and the quality of a neighbor cell is higher than a threshold.
Event T1 (Event T1): It indicates that the time measured by a terminal is within a time interval.
Event D1 (Event D1): It indicates that a distance between the position of the terminal and a reference point is within a specified interval.

With reference to the accompanying drawings and by using some embodiments and their application scenarios, the operation execution method and apparatus, the terminal, and the network side device provided by embodiments of the present application will be illustrated in detail hereafter.

Referring to FIG. 2, FIG. 2 is flowchart of an operation execution method provided by an embodiment of the present application. As shown in FIG. 2, the operation execution method includes the following steps:
Step 101: A terminal receives target control signaling sent by a network side device.
Step 102: In a case that the target control signaling meets a target condition, the terminal determines to execute a first operation.

The first operation includes at least one of the following:
a conditional handover (CHO) operation;
a conventional primary secondary cell (Primary secondary cell, PSCell) change (Conditional PSCell Change, CPC) operation; and
a secondary cell (Secondary Cell, SCell) deactivation operation.

The target control signaling may be downlink control information (Downlink Control Information, DCI) 2_9, or the target control signaling may be signaling included in the DCI 2_9.

In an implementation, the terminal receives the target control signaling, and determines whether to initiate the first operation or not according to the target control signaling. The first operation includes at least one of the following: a CHO operation; a CPC operation; and an SCell deactivation operation.

In an implementation, in a case that the target control signaling meets one of the following target conditions, the terminal determines to execute the CHO operation in the first operation:
the value of a specific bit of the target control signaling is a specific value, the specific bit of the target control signaling is associated with the terminal or associated with the PCell of the terminal, and the association relationship between the specific bit and the PCell may be pre-configured;
the target control signaling carries a group ID, the group ID is associated with the terminal or associated with the PCell of the terminal, and the association relationship may be pre-configured; and
the target control signaling is received through the PCell of the terminal or the serving cell in the cell group where the PCell is located (such as the master cell group (Master Cell Group, MCG)), and the target control signaling is used for indicating whether the special cell SpCell enters the network energy-saving state or not.

In an implementation, in a case that the target control signaling meets one of the following target conditions, the terminal determines to execute the CPC operation in the first operation:
the value of a specific bit of the target control signaling is a specific value, the specific bit of the target control signaling is associated with the terminal or associated with the PSCell of the terminal, and the association relationship between the specific bit and the PSCell may be pre-configured;
the target control signaling carries a group ID, the group ID is associated with the terminal or associated with the PSCell of the terminal, and the association relationship may be pre-configured; and
the target control signaling is received through the PSCell of the terminal or the serving cell in the cell group where the PSCell is located (such as the secondary cell group (Secondary Cell Group, SCG)).

In an implementation, in a case that the target control signaling meets one of the following target conditions, the terminal determines to execute the Scell deactivation operation in the first operation on the first Scell:
the target control signaling indicates that the first Scell of the terminal enters the network energy-saving state; and
the Pcell or PScell of the cell group (MCG or SCG) to which the first SCell of the terminal belongs does not enter the network energy-saving state.

It should be noted that, to reduce network energy consumption, a network may adopt some energy-saving measures, such as shutting down some cells in a case of low demand on communication services, or allowing some cells to enter a specific energy-saving mode (cell DTX/DRX). Actually, the same cell may be a primary cell of some terminals but a secondary cell of other terminals. For a terminal, the performance loss caused by the network energy-saving operation of the primary cell is relatively large. At this time, the terminal needs to perform conditional handover to switch to another normally operating cell. The influences of network energy-saving operations in the primary secondary cells are similar. When the PSCell enters the network energy-saving state, the terminal needs to execute the CPC operation. However, the influence of the network energy-saving operation in the secondary cell is relatively small. At this time, the terminal does not need to perform conditional handover, and may execute the secondary cell deactivation operation.

In the embodiments of the present application, the terminal receives target control signaling sent by a network side device; and the terminal determines to execute a first operation in a case that the target control signaling meets a target condition. The first operation includes at least one of the following: a conditional handover (CHO) operation, a conditional primary secondary cell (PSCell) change (CPC) operation; and a secondary cell (SCell) deactivation operation. Therefore, the terminal triggers the first operation by determining whether the target control signaling meets the target condition or not, so that the network can accurately trigger different terminals through the target control signaling to execute the conditional handover operation, the CPC operation or the secondary cell deactivation operation.

Optionally, the CHO operation includes at least one of the following:
CHO execution; CHO evaluation; first CHO execution condition enabling; and CHO measurement;
   or
the CPC operation includes at least one of the following:
   CPC execution; CPC evaluation; first CPC execution condition enabling; and CPC measurement;
   the first CHO execution condition is the CHO execution condition used by the terminal in a case that a primary cell (Primary cell, PCell) enters a network energy-saving state; and
   the first CPC execution condition is a CPC execution condition used by the terminal in a case that a primary secondary cell (PSCell) enters a network energy-saving state.

The first CHO execution condition may be an NES specific CHO condition. The first CHO execution condition enabling may be understood as: using the first CHO execution condition or enabling the first CHO execution condition to take effect.

The first CPC execution condition may be an NES specific CPC condition. The first CPC execution condition enabling may be understood as: using the first CPC execution condition or enabling the first CPC execution condition to take effect.

Optionally, the target control signaling is L1 group common signaling, and the target control signaling is scrambled through a first radio network temporary identifier (Radio Network Temporary Identifier, RNTI).

It is to be understood that the target control signaling is scrambled through the first RNTI, and this may refer to that the target control signaling is scrambled through a specific RNTI. The specific RNTI may be an RNTI related to network energy-saving, for example, an NES RNTI.

In this implementation, the target control signaling is L1 group common signaling, and the target control signaling is scrambled through the first RNTI. Therefore, upon receiving the L1 group common signaling, the terminal can determine whether the target condition is satisfied or not by determining the L1 group common signaling, so as to trigger the CHO operation, or the CPC operation, or the SCell deactivation operation. This can avoid erroneous triggering of the CHO operation, the CPC operation, or the SCell deactivation operation of this terminal by the L1 group common signaling used for triggering the CHO operation, the CPC operation, or the SCell deactivation operation of another terminal, so that the transmission abnormality or resource waste may be avoided.

Optionally, the target control signaling is used for indicating whether at least one serving cell of the terminal enters the network energy-saving state or not, or the target control signaling is used for indicating whether the terminal executes the first operation or not.

In a case that the target control signaling indicates that the terminal executes the CHO operation, the terminal determines to execute the CHO operation. In a case that the target control signaling indicates that the terminal executes the CPC operation, the terminal determines to execute the CPC operation. In a case that the target control signaling indicates that the terminal executes the SCell deactivation operation, the terminal determines to execute the SCell deactivation operation.

The network energy-saving state may refer to the Cell DTX/DRX entering the active state or cell shutdown.

In an implementation, the target control signaling may include a target bit block, the target bit block includes one bit or more bits, and the target bit block is associated with the terminal, and is configured to indicate whether the terminal executes the first operation or not. Exemplarily, when the value of the bit associated with the terminal in the target bit block is 1, it indicates that the terminal executes the first operation; and when the value of the bit associated with the terminal in the target bit block is 0, it indicates that the terminal does not execute the first operation.

In an implementation, the target control signaling may include a target bit block, and the target bit block is configured to indicate whether at least one serving cell of the terminal enters the network energy-saving state or not. The target bit block may include at least one first bit block, each of the first bit block is associated with at least one serving cell of the terminal, and different first bit blocks are configured to indicate whether different serving cells enter the network energy-saving state or not; or the target bit block may include a second bit block, the second bit block includes one bit or a plurality of continuous bits, each bit in the second bit block is associated with one serving cell of the terminal, or different values of the second bit block indicate whether different serving cells of the terminal enter the network energy-saving state or not, exemplarily, the second bit block is two continuous bits from the X^{th} bit in the target control signaling, the value of the second bit block being "00" indicates that the PCell of the terminal enters the network energy-saving state, the value of the second bit block being "01" indicates that the PSCell of the terminal enters the network energy-saving state, the value of the second bit block being "10" indicates that the SCell 1 of the terminal enters the network energy-saving state, and the value of the second bit block being "11" indicates that the SCell 2 of the terminal enters the network energy-saving state.

In this implementation, the target control signaling is used for indicating whether at least one serving cell of the terminal enters the network energy-saving state or not, so that the terminal can determine whether the serving cell of the terminal enters the network energy-saving state or not through the target control signaling, and the terminal can further determine to execute the first operation based on the serving cell entering the network energy-saving state.

Optionally, the indicating whether at least one serving cell of the terminal enters the network energy-saving state or not includes at least one of the following:
indicating whether the PCell of the terminal enters the network energy-saving state or not;
indicating whether the PSCell of the terminal enters the network energy-saving state or not; and
indicating whether at least one SCell of the terminal enters the network energy-saving state or not.

The indicating whether at least one secondary cell SCell of the terminal enters the network energy-saving state or not may include at least one of the following:
indicating whether one or more MCG SCells of the terminal enter the network energy-saving state or not; and
indicating whether one or more SCG SCells of the terminal enter the network energy-saving state or not.

In an implementation, the target control signaling may indicate whether the MCG of the terminal enters the network energy-saving state or not through 1 bit information.

In an implementation, the target control signaling may indicate whether the SCG of the terminal enters the network energy-saving state or not through 1 bit information.

Optionally, the operation that the terminal determines to execute a first operation in a case that the target control signaling meets a target condition includes at least one of the following:
in a case that the terminal determines that the PCell of the terminal enters the network energy-saving state according to the target control signaling, the terminal determines to execute the CHO operation;
in a case that the terminal determines that the PSCell of the terminal enters the network energy-saving state according to the target control signaling, the terminal determines to execute the CPC operation; and
in a case that the terminal determines that the SCell of the terminal enters the network energy-saving state according to the target control signaling, the terminal determines to execute the SCell deactivation operation.

In this implementation, in a case that the terminal determines that the PCell of the terminal enters the network energy-saving state according to the target control signaling, the terminal determines to execute the CHO operation, so that the network side and the terminal side have a consistent understanding of whether to trigger the CHO operation or not after receiving the target control signaling, and the erroneous triggering of the CHO operation of the terminal can be avoided.

In this implementation, in a case that the terminal determines that the PSCell of the terminal enters the network energy-saving state according to the target control signaling, the terminal determines to execute the CPC operation, so that the network side and the terminal side have a consistent understanding of whether to trigger the CPC operation or not after receiving the target control signaling, and the erroneous triggering of the CPC operation of the terminal can be avoided.

In this implementation, in a case that the terminal determines that the SCell of the terminal enters the network energy-saving state according to the target control signaling, the terminal determines to execute the SCell deactivation operation, so that the network side and the terminal side have a consistent understanding of whether to trigger the SCell deactivation operation or not after receiving the target control signaling, and the erroneous triggering of the SCell deactivation operation of the terminal may be avoided.

Optionally, the operation that the terminal receives target control signaling sent by the network side device includes:
the terminal receives, through a first serving cell, target control signaling sent by the network side device.

The method further includes at least one of the following:
the terminal determines the first serving cell as a serving cell entering the network energy-saving state;
the terminal determines a special cell (Special Cell, SpCell) corresponding to a cell group where the first serving cell is located as a serving cell entering the network energy-saving state; and
the terminal determines a serving cell associated with the first serving cell as a serving cell entering the network energy-saving state.

It should be noted that, the target control signaling may be used for indicating whether a cell associated with the cell receiving the target control signaling enters the network energy-saving state or not, and the cell associated with the cell receiving the target control signaling may include at least one of the following: a cell receiving the target control signaling; and an sPCell corresponding to the cell group in which the cell receiving the target control signaling is located.

Optionally, the target control signaling includes at least one first bit block, the first bit block is determined by a first start position and a bit block length, each first bit block is associated with at least one serving cell of the terminal, and the first bit block is configured to indicate whether the associated serving cell enters the network energy-saving state or not.

The association relationship between the first bit block and the serving cell of the terminal may be configured by the network side device, or may be predefined by a protocol. The first start position may be predefined by a protocol or configured by the network side device, and the bit length of the first bit block may be predefined by a protocol or configured by the network side device.

In an implementation, the terminal may detect the value of the first bit block to determine whether the associated serving cell enters the network energy-saving state or not.

Exemplarily, the network side device configures the first bit block as an X^{th} bit in the target control signaling, and the X^{th} bit corresponds to the PCell of the terminal; or the network side device configures the first bit block as a Y^{th} bit in the target control signaling, and the Y^{th} bit corresponds to the SCell 1 of the terminal; or the network side device configures the first bit block as a Z^{th} bit in the target control signaling, and the Z^{th} bit corresponds to the SCell 2 of the terminal; or the network side device configures the first bit block as a K^{th} bit in the target control signaling, and the K^{th} bit corresponds to the PSCell of the terminal. In this example, the length of the first bit block is 1 bit.

Exemplarily, the start position of the first bit block configured by the network side device is the X^{th} bit in the target control signaling, and this X^{th} bit corresponds to the PCell of the terminal. The length of the first bit block may be given as 2 in a manner of network configuration or protocol agreement. The X^{th} bit and the (X+1)^{th} bit respectively indicate whether the PCell enters cell shutdown or not and whether the Cell DTX/DRX is activated or not.

Exemplarily, in a case that the value of the first bit block is a first value (for example, 1), it indicates that the corresponding serving cell enters the network energy-saving state; and in a case that the value of the first bit block is a second value (for example, 0), it indicates that the corresponding serving cell does not enter the network energy-saving state or leaves away from the network energy-saving state.

It should be noted that, the at least one first bit block may be discontinuous bit blocks in the target control signaling. Exemplarily, the target control signaling includes a first bit block 1 and a first bit block 2, and the first bit block 1 and the first bit block 2 are discontinuous bit blocks.

In an implementation, before the terminal receives the target control signaling sent by the network side device, the method further includes:
the terminal receives third configuration information sent by the network side device, and the third configuration information is used for indicating an association relationship between the first bit block and the serving cell of the terminal.

In this implementation, whether at least one serving cell of the terminal enters the network energy-saving state or not is indicated through the first bit block in the target control signaling, so after receiving the target control signaling, the terminal may determine the first bit block in the target control signaling based on the first start position and the bit block length, and determine whether the serving cell of the terminal enters the network energy-saving state or not according to the value of the first bit block, and the terminal may further determine to execute the first operation based on the serving cell entering the network energy-saving state.

Optionally, the first start position is configured at a network side, or the bit block length is configured at the network side or agreed upon by a protocol.

It should be noted that, the terminal may determine the position of the first bit block in the target control signaling based on the first start position and the bit block length, and determine whether the serving cell of the terminal enters the network energy-saving state or not according to the value of the first bit block, and the terminal may further determine to execute the first operation based on the serving cell entering the network energy-saving state.

Optionally, the serving cell corresponding to the first bit block is determined through a serving cell identifier configured by the network side device, or is determined by a type of the serving cell.

The serving cell identifier includes at least one of the following:
an SCell identifier of the terminal; a PCell identifier of the terminal; and a PSCell identifier of the terminal; and
the type of the serving cell includes at least one of the following:
a PCell; a PSCell; and a special cell.

It should be noted that, the network side may configure the association relationship between the serving cell identifier and the first bit block.

In addition, the serving cell identifier may further include: an SCell index.

The serving cell identifier may further include: a serving cell group identifier configured for the terminal.

Optionally, the method further includes:
obtaining target configuration information by the terminal, where the target configuration information is used for indicating an association relationship between the first bit block and at least one serving cell of the terminal.

The association relationship between the first bit block and the serving cell of each terminal may be configured for each terminal. Exemplarily, through the target configuration information, the first bit block is configured as an X^{th} bit in the target control signaling, and the X^{th} bit corresponds to the PCell of the terminal; or the association relationship between the first bit block and the serving cell may be configured for each serving cell. Exemplarily, through the target configuration information, the first bit block is configured as an X^{th} bit in the target control signaling, the X^{th} bit corresponds to the serving cell 1, the target configuration information may be delivered to the terminal under the serving cell 1, and in a case that the serving cell 1 is the PCell of the terminal, the terminal may determine that whether the PCell of the terminal enters the network energy-saving state or not through the X^{th} bit.

In an implementation, the obtaining target configuration information by the terminal may include: the terminal receives the target configuration information sent by the network side device.

In an implementation, the target configuration information may be predefined by a protocol.

In this implementation, the terminal obtains the target configuration information, and the target configuration information is used for indicating the association relationship between the first bit block and the at least one serving cell of the terminal, so that the terminal can find the first bit block from the target control signaling, and determine whether the associated serving cell enters the network energy-saving state or not through the value of the first bit block.

Optionally, the target control signaling includes a second bit block, and the second bit block includes one bit or a plurality of continuous bits.

Each bit in the second bit block is associated with one serving cell of the terminal, the second bit block is configured to indicate whether the associated serving cell enters the network energy-saving state or not; and the association relationship between each bit in the second bit block and the serving cell is predefined by a protocol or configured at the network side.

The association relationship between the second bit block and the serving cell of the terminal may be configured by the network side device, or may be predefined by a protocol.

The start position of the second bit block in the target control signaling may be configured at the network side. The bit length of the second bit block may be determined by at least one of the following: being predefined by a protocol; being configured at the network side; whether the dual connectivity (DC) is configured for the terminal or not; and whether the first CHO execution condition is configured for the terminal or not.

In an implementation, the bit block length of the second bit block may be predefined by the protocol or configured at the network side. Exemplarily, the protocol predefines or the network side configures the bit block length of the second bit block as X bits (for example, X=1 or X=2).

It should be noted that, the second bit block may correspond to the serving cell or the serving cell group through a bit map; or the second bit block may indicate the serving cell or the serving cell group identifier.

Exemplarily, the protocol predefines or the network side device configures the second bit block as 2 continuous bits from the X^{th} bit in the target control signaling, the X^{th} bit corresponds to the PCell of the terminal, and the (X+1)^{th} bit corresponds to the PSCell of the terminal. In a case that the value of the X^{th} bit is a first value (for example, 1), it indicates that the PCell enters the network energy-saving state; and in a case that the value of the (X+1)^{th} bit is a second value (for example, 0), it indicates that the PSCell does not enter the network energy-saving state; and

Exemplarily, the network configures the position of the second bit block as the X^{th} bit, so the X^{th} bit corresponds to the PCell of the terminal. In a case that the terminal is not configured with another serving cell, the second bit block only has the X^{th} bit. In a case that the terminal is configured with a serving cell other than PCell, each bit starting from the (X+1)^{th} bit corresponds to one serving cell of the terminal. For example, the terminal is configured with PCell, PSCell, SCell 1, SCell 2, and SCell 3, then the length of the second bit block is 5, and starting from the X^{th} bit, the bits correspond to PCell, PSCell, SCell 1, SCell 2, and SCell 3, respectively. Optionally, considering that some cells may not support network energy-saving or never enter the network energy-saving state, the network can configure whether bits corresponding to certain serving cells are included or not. For example, the terminal is configured with PCell, PSCell, SCell 1, SCell 2, and SCell 3, and the PCell, SCell 1, and SCell 3 are configured to obtain the network energy-saving state through the target control signaling. When the UE receives the target control signaling, starting from the X^{th} bit, the bits correspond to the network energy-saving state of PCell, SCell 1, and SCell 3, respectively.

In an implementation, before the terminal receives the target control signaling sent by the network side device, the method further includes:
the terminal receives fourth configuration information sent by the network side device, and the fourth configuration information is used for indicating an association relationship between the second bit block and the serving cell of the terminal.

In this implementation, whether the associated serving cell enters the network energy-saving state or not is indicated through the second bit block in the target control signaling, so after receiving the target control signaling, the terminal may determine whether the serving cell of the terminal enters the network energy-saving state or not according to the value of the second bit block, and the terminal may further determine to execute the first operation based on the serving cell entering the network energy-saving state.

Optionally, the method further includes:
the terminal determines the association relationship between each bit in the second bit block and the serving cell of the terminal according to at least one of whether dual connectivity (DC) is configured or not, whether a CHO configuration related to network energy-saving is configured or not, the type of the serving cell, the size of the serving cell identifier, and whether a network energy-saving feature is configured for the serving cell or not.

The terminal may determine the bit block length of the second bit block according to whether the dual connectivity (DC) is configured or not, or whether the CHO configuration related to network energy-saving is configured or not, and determine the association relationship between each bit in the second bit block and the serving cell of the terminal according to the bit block length of the second bit block.

In an implementation, the bit block length of the second bit block may be related to whether the dual connectivity (DC) is configured or not. The terminal may determine the association relationship between each bit in the second bit block and the serving cell of the terminal according to the type of the serving cell and the bit block length of the second bit block. For example, in a case that the DC is configured, the bit block length of the second bit block is 2 bits, and the 2 bits correspond to the Pcell and PScell, respectively; and in a case that the DC is not configured, the bit block length of the second bit block is 1 bit, which corresponds to the Pcell.

In an implementation, the bit block length of the second bit block may be related to whether the CHO configuration related to network energy-saving is configured or not. In a case that the CPC configuration related to the network energy-saving is not configured, the bit block length of the second bit block is 1 bit; and in a case that the CPC configuration related to the network energy-saving is configured, the bit block length of the second bit block is 2 bits.

Exemplarily, in a case that NES specific CPC is not configured, the bit block length of the second bit block is 1 bit; and in a case that NES specific CHO or NES specific CPC is configured, the bit block length of the second bit block is 2 bits.

Exemplarily, the second bit block is a bit block with a length of 1 bit, and its position in the target control signaling is configured by the network. When the UE receives the target control signaling through the PCell or through the MCG, the second bit block indicates the network energy-saving state of the PCell. When the UE receives the target control signaling through the PSCell or the SCG, the second bit block indicates the network energy-saving state of the PSCell.

Exemplarily, the network configures the position of the second bit block as the X^{th} bit, and the X^{th} bit corresponds to the PCell of the terminal. The terminal is configured with PCell, PSCell, SCell 1, SCell 2, and SCell 3. The PCell, SCell 1, and SCell 3 are configured with the network energy-saving features. When receiving the target control signaling, the UE determines that, starting from the X^{th} bit, the bits correspond to the network energy-saving states of the PCell, SCell 1, and SCell 3, respectively.

In an implementation, the network side device may configure the corresponding relationship between each bit in the second bit block and the serving cell identifier. The terminal may determine the association relationship between each bit in the second bit block and the serving cell of the terminal based on the corresponding relationship between each bit in the second bit block configured by the network side device and the serving cell identifier.

In this implementation, the terminal determines the association relationship between each bit in the second bit block and the serving cell of the terminal according to at least one of whether dual connectivity (DC) is configured or not, whether a CHO configuration related to network energy-saving is configured or not, the type of the serving cell, the size of the serving cell identifier, and whether a network energy-saving feature is configured for the serving cell or not, so that the terminal may determine whether the serving cell of the terminal enters the network energy-saving state or not according to the association relationship between each bit in the second bit block and the serving cell of the terminal, and the terminal may further determine to execute the first operation based on the serving cell entering the network energy-saving state.

Optionally, after the terminal receives the target control signaling sent by the network side device, the method further includes at least one of the following:
in a case that the target control signaling carries a first group identifier associated with the terminal, the terminal determines that the PCell of the terminal enters the network energy-saving state; and
in a case that the target control signaling carries a second group identifier associated with the terminal, the terminal determines that the PSCell of the terminal enters the network energy-saving state.

The first group identifier or the second group identifier is configured at the network side.

In an implementation, the operation that the target control signaling indicates that the PCell of the terminal enters the network energy-saving state includes at least one of the following:
the first bit block or the second bit block in the target control signaling indicates that the PCell of the terminal enters the network energy-saving state;
the target control signaling carries a first group identifier associated with the terminal; and
the target control signaling is received through the PCell of the terminal or the cell in the cell group where the PCell is located.

In an implementation, the operation that the target control signaling indicates that the PSCell of the terminal enters the network energy-saving state includes at least one of the following:
the first bit block or the second bit block in the target control signaling indicates that the PSCell of the terminal enters the network energy-saving state;
the target control signaling carries a second group identifier associated with the terminal; and
the target control signaling is received through the PSCell of the terminal or the cell in the cell group where the PSCell is located.

In an implementation, the operation that the target control signaling indicates that the SCell of the terminal enters the network energy-saving state includes at least one of the following:
the first bit block or the second bit block in the target control signaling indicates that the SCell of the terminal enters the network energy-saving state; and
the first bit block or the second bit block in the target control signaling indicates that the PCell or PSCell of the cell group (MCG or SCG) to which the SCell of the terminal belongs does not enter the network energy-saving state.

In this implementation, in a case that the target control signaling carries the first group identifier associated with the terminal, the terminal determines that the PCell of the terminal enters the network energy-saving state, so when the target control signaling carries the first group identifier associated with the terminal, the terminal is triggered to execute the CHO operation, and the network side and the terminal side have a consistent understanding of whether to trigger the CHO operation or not after receiving the target control signaling; and in a case that the target control signaling carries the second group identifier associated with the terminal, the terminal determines that the PSCell of the terminal enters the network energy-saving state, so in a case that the target control signaling carries the second group identifier associated with the terminal, the terminal is triggered to execute the CPC operation, and the network side and the terminal side have a consistent understanding of whether to trigger the CPC operation or not after receiving the target control signaling.

Optionally, the operation that the terminal determines to execute a first operation in a case that the target control signaling meets a target condition, and the first operation includes CHO execution includes: if it is determined that a CHO execution condition is met, the terminal executes CHO;
or
the operation that the terminal determines to execute a first operation in a case that the target control signaling meets a target condition, and the first operation includes CPC execution includes: if it is determined that a CPC execution condition is met, the terminal executes CPC.

In an implementation, in a case that the target control signaling meets the target condition, and the first operation includes the CHO execution or the CPC execution, before the terminal initiates the CHO execution or the CPC execution, preconfigured other CHO execution conditions or CPC execution conditions also need to be met.

Optionally, configuration information for DC of the terminal and configuration information for CHO related to network energy-saving are not allowed to be configured simultaneously.

Optionally, the method further includes:
in a case that the terminal receives first configuration information sent by the network side device, and the terminal receives second configuration information sent by the network side device, the terminal executes a second operation.

The second operation includes at least one of the following:
the terminal determines that the second configuration information does not take effect; and
the terminal determines that the reconfiguration fails.

The first configuration information is the configuration information for DC, and the second configuration information is the configuration information for CHO related to network energy-saving; or the first configuration information is the configuration information for CHO related to network energy-saving, and the second configuration information is the configuration information for DC.

In this implementation, in a case that the terminal receives the first configuration information sent by the network side device, and the terminal receives the second configuration information sent by the network side device, the terminal executes a second operation. In such a way, it can be ensured that the configuration information for DC of the terminal and the configuration information for CHO related to the network energy-saving are configured simultaneously.

In the embodiments of the present application, configuration information for dual connectivity (Dual connectivity, DC) of the terminal and configuration information for CHO related to network energy-saving are not allowed to be configured simultaneously, or the configuration information for DC of the terminal and the configuration information of CHO related to network energy-saving are allowed to be configured simultaneously. The configuration information for CHO related to network energy-saving may be the configuration information of the network energy-saving (Network Energy-Saving, NES) CHO.

An embodiment of the present application further provides a configuration method. The method includes: configuration information for DC of the terminal and configuration information for CHO related to network energy-saving are not allowed to be configured simultaneously.

An embodiment of the present application further provides an operation execution method. The operation execution method provided by embodiments of the present application includes:
in a case that the terminal receives the first configuration information sent by the network side device, and the terminal receives the second configuration information sent by the network side device, the terminal executes a second operation.

The second operation includes at least one of the following:
the terminal determines that the second configuration information does not take effect; and
the terminal determines that the reconfiguration fails.

The first configuration information is the configuration information for DC, and the second configuration information is the configuration information for CHO related to network energy-saving; or the first configuration information is the configuration information for CHO related to network energy-saving, and the second configuration information is the configuration information for DC.

Referring to FIG. 3, FIG. 3 is flowchart of an operation execution method provided by an embodiment of the present application. As shown in FIG. 3, the operation execution method includes the following steps:
Step 201: A network side device sends target control signaling to a terminal.
Step 202: In a case that the target control signaling meets a target condition, the target control signaling is used for determining to execute a first operation.

The first operation includes at least one of the following:
a conditional handover (CHO) operation;
a conditional primary secondary cell (PSCell) change (CPC) operation; and
a secondary cell (SCell) deactivation operation.

Optionally, the CHO operation includes at least one of the following:
CHO execution; CHO evaluation; first CHO execution condition enabling; and CHO measurement;
   or
the CPC operation includes at least one of the following:
   CPC execution; CPC evaluation; first CPC execution condition enabling; and CPC measurement;
   the first CHO execution condition is a CHO execution condition used by the terminal in a case that a primary cell (PCell) enters a network energy-saving state; and
   the first CPC execution condition is a CPC execution condition used by the terminal in a case that a primary secondary cell (PSCell) enters a network energy-saving state.

Optionally, the target control signaling is L1 group common signaling, and the target control signaling is scrambled through a first radio network temporary identifier (RNTI).

Optionally, the target control signaling is used for indicating whether at least one serving cell of the terminal enters the network energy-saving state or not, or the target control signaling is used for indicating whether the terminal executes the first operation or not.

Optionally, the method further includes:
the network side device executes a third operation in a case that the network side device sends first configuration information to the terminal.

The third operation includes at least one of the following:
the network side device determines not to configure the second configuration information to the terminal; and
in a case that the network side device determines to configure the second configuration information to the terminal, the network side device executes a deconfiguration operation on the terminal; and the deconfiguration operation is used for deconfiguring the first configuration information.

The first configuration information is the configuration information for DC, and the second configuration information is the configuration information for CHO related to network energy-saving; or the first configuration information is the configuration information for CHO related to network energy-saving, and the second configuration information is the configuration information for DC.

In an implementation, taking the first operation as the CHO operation as an example, the network side device sends the target control signaling to the terminal to indicate that one or more cells of one or more terminals enter the network energy-saving state. The network side device configures a first terminal group with PCell=cell 1 to use the same bit a to check whether to trigger the CHO operation in the first operation or not or to indicate whether the Pcell enters the network energy-saving state or not; and the network side device configures a second terminal group with PCell=cell 2 to use the same bit b to check whether to trigger the CHO operation in the first operation or not or to indicate whether the PCell enters the network energy-saving state or not. The a and the b are different.

It should be noted that, this embodiment is an implementation of a corresponding network side device in the embodiment shown in FIG. 2. For its specific implementation, reference may be made to related descriptions in the embodiment shown in FIG. 2. To avoid repetition, details are not described in this embodiment again.

The operation execution method provided in the embodiment of the present application will be illustrated below through several specific embodiments.

### Embodiment 1:

In this embodiment, a specific bit of target control signaling is mapped to specific UE.

An operation execution method of this embodiment includes the following steps:
Step (11): The UE receives CHO configuration, the CHO configuration includes a candidate target cell, and an NES specific CHO execution condition.
Step (12): The UE receives configuration information 1, and the configuration information 1 is used for indicating a mapping relationship between a bit of the target control signaling (such as DCI 2_9) and the UE. For example, the configuration information 1 indicates that an x^{th} bit in DCI 2_9 corresponds to the UE.
Step (13): The UE receives DCI 2_9, in a case that the DCI 2_9 carries the x^{th} bit, or the value of the x^{th} bit is y (for example, 1), the UE initiates a first operation, and exemplarily, the first operation may be CHO execution.
Step (14): The UE completes random access on a candidate target cell.

### Embodiment 2:

In this embodiment, the target control signaling carries a group ID of the UE.

An operation execution method of this embodiment includes the following steps:
Step (21): The UE receives CHO configuration, the CHO configuration includes a candidate target cell, and an NES specific CHO execution condition.
Step (22): The UE receives configuration information 2, and the configuration information 2 is used for indicating grouping information of the UE, and for example, the UE is assigned Group ID = 1.
Step (23): The UE receives the target control signaling (such as DCI 2_9), if the DCI 2_9 carries a group ID of the UE, the UE initiates a first operation, and exemplarily, the first operation may be CHO execution.
Step (24): The UE completes random access on a candidate target cell.

### Embodiment 3:

In this embodiment, each bit of the target control signaling corresponds to each serving cell.

An operation execution method of this embodiment includes the following steps:
Step (31): The UE receives CHO configuration, the CHO configuration includes a candidate target cell, and an NES specific CHO execution condition.
Step (32): The UE receives configuration information 3, and the configuration information 3 is used for indicating a mapping relationship between a bit of the target control signaling (such as DCI 2_9) and the serving cell of the UE. For example, the configuration information 3 indicates that an X^{th} bit in DCI 2_9 corresponds to PCell of the UE, a Y^{th} bit corresponds to SCell 1 of the UE, and a Z^{th} bit corresponds to SCell 2 of the UE.
Step (33): The UE receives DCI 2_9, if the value of the X^{th} bit in DCI 2_9 is y (for example, 1), it indicates that the PCell of the UE enters a network energy-saving state, the UE initiates a first operation, and exemplarily, the first operation may be CHO execution.
Step (34): The UE completes random access on a candidate target cell.

Optionally, in a case that DC is configured, the configuration information 3 indicates that an M^{th} bit in DCI 2_9 corresponds to the PSCell of the UE. In a case that the UE receives DCI 2_9, if the value of the M^{th} bit in DCI 2_9 is y (for example, 1), it indicates that the PSCell of the UE enters the network energy-saving state, the UE initiates the first operation, and exemplarily, the first operation may be CPC execution.

Optionally, in a case that DC is configured, and DCI 2_9 is configured per CG, the network side may configure the bit mapped for the SPCell in each CG in DCI 2_9.

### Embodiment 4:

In this embodiment, the continuous N bits of the target control signaling correspond to CHO or CPC of the UE.

An operation execution method of this embodiment includes the following steps:
Step (41): The UE is configured with CHO and CPC.
Step (42): The UE receives configuration information 4, and the configuration information 4 is used for indicating a mapping relationship between a bit of the target control signaling (such as DCI 2_9) and the PCell and PSCell of the UE. Exemplarily, starting from an X^{th} bit of DCI 2_9, 2 continuous bits respectively indicate the network energy-saving state of the PCell and PSCell.
Step (43): The UE receives DCI 2_9, if the value of the X^{th} bit in DCI 2_9 is y (for example, 1), it indicates that the PCell of the UE enters the network energy-saving state, the UE initiates a first operation, and exemplarily, the first operation may be CHO execution. If the value of an (X+1)^{th} bit in DCI 2_9 is y (for example, 1), it indicates that the PSCell of the UE enters the network energy-saving state, the UE initiates a first operation, and exemplarily, the first operation may be CPC execution.

### Embodiment 5:

In this embodiment, DC and NES CHO do not coexist.

The protocol stipulates that DC and NES CHO shall not be configured simultaneously.

It can be ensured by the UE or the network side that DC and NES CHO are not configured simultaneously. Exemplarily, the network side ensures that when either DC or NES CHO is configured by the terminal, the other is not configured or is deconfigured; or if the UE configured with either DC or NES CHO receives the other of NES CHO configuration and DC configuration, the UE ignores the later configuration, or the UE determines the reconfiguration failure, and initiates a reconstruction process.

### Embodiment 6:

In this embodiment, DC and NES CHO coexist.

The network side and the UE allow to configure DC and NES CHO simultaneously.

The target control signaling may be per UE. No matter from which cell group (Cell Group, CG) the UE receives the target control signaling, the target control signaling triggers CHO of the UE according to the mapping rules of the above embodiments; or
the target control signaling may be per cell group (CG). When the target control signaling received by the UE is related to the SCG, the UE triggers CPC. Optionally, the configuration related to the target control signaling of SCG, i.e., relevant configuration information of SCG in the configuration information 1 to the configuration information 4 in the above embodiments may be configured by a secondary node (Secondary Node, SN) or a master node (Master Node, MN).

Through the operation execution method of this embodiment, the network side and the terminal side have a consistent understanding of the DCI 2_9 reception by the terminal and whether to trigger the CHO operation after the DCI 2_9 reception, so that the problems such as transmission failure or resource waste caused by inconsistent understanding between the network side and the terminal side can be avoided.

An execution subject of the operation execution method provided by the embodiment of the present application may be an operation execution apparatus. In embodiments of the present application, the operation execution apparatus provided by the embodiment of the present application is illustrated by taking the operation execution apparatus executing the operation execution method as an example.

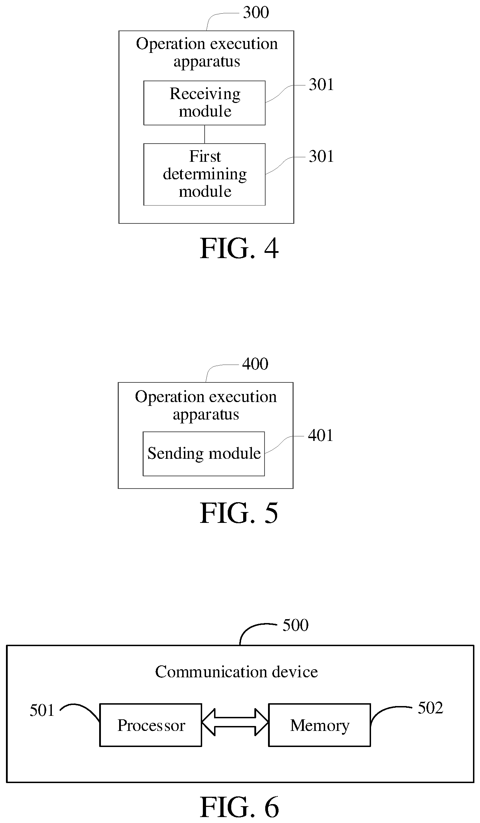

Referring to FIG. 4, FIG. 4 is a schematic structural diagram of an operation execution apparatus provided by an embodiment of the present application. The terminal includes the operation execution apparatus. As shown in FIG. 4, the operation execution apparatus 300 includes:
a receiving module 301, configured to receive target control signaling sent by a network side device; and
a first determining module 302, configured to determine to execute a first operation in a case that the target control signaling meets a target condition.

The first operation includes at least one of the following:
a conditional handover (CHO) operation;
a conditional primary secondary cell (PSCell) change (CPC) operation; and
a secondary cell (SCell) deactivation operation.

Optionally, the CHO operation includes at least one of the following:
CHO execution; CHO evaluation; first CHO execution condition enabling; and CHO measurement;
   or
the CPC operation includes at least one of the following:
   CPC execution; CPC evaluation; first CPC execution condition enabling; and CPC measurement;
   the first CHO execution condition is a CHO execution condition used by the terminal in a case that a primary cell (PCell) enters a network energy-saving state; and
   the first CPC execution condition is a CPC execution condition used by the terminal in a case that a primary secondary cell (PSCell) enters a network energy-saving state.

Optionally, the target control signaling is L1 group common signaling, and the target control signaling is scrambled through a first radio network temporary identifier (RNTI).

Optionally, the target control signaling is used for indicating whether at least one serving cell of the terminal enters the network energy-saving state or not, or the target control signaling is used for indicating whether the terminal executes the first operation or not.

Optionally, the indicating whether at least one serving cell of the terminal enters the network energy-saving state or not includes at least one of the following:
indicating whether the PCell of the terminal enters the network energy-saving state or not;
indicating whether the PSCell of the terminal enters the network energy-saving state or not; and
indicating whether at least one SCell of the terminal enters the network energy-saving state or not.

Optionally, the first determining module is specifically configured for at least one of the following:
in a case of determining that the PCell of the terminal enters the network energy-saving state according to the target control signaling, determining to execute the CHO operation;
in a case of determining that the PSCell of the terminal enters the network energy-saving state according to the target control signaling, determining to execute the CPC operation; and
in a case of determining that the SCell of the terminal enters the network energy-saving state according to the target control signaling, determining to execute the SCell deactivation operation.

Optionally, the receiving module is specifically configured to:
receive, through a first serving cell, target control signaling sent by the network side device.

The apparatus further includes a second determining module, configured for at least one of the following:
determining the first serving cell as a serving cell entering the network energy-saving state;
determining a special cell (SpCell) corresponding to a cell group where the first serving cell is located as a serving cell entering the network energy-saving state; and
determining a serving cell associated with the first serving cell as a serving cell entering the network energy-saving state.

Optionally, the target control signaling includes at least one first bit block, the first bit block is determined by a first start position and a bit block length, each first bit block is associated with at least one serving cell of the terminal, and the first bit block is configured to indicate whether the associated serving cell enters the network energy-saving state or not.

Optionally, the first start position is configured at a network side, or the bit block length is configured at the network side or agreed upon by a protocol.

Optionally, the serving cell corresponding to the first bit block is determined through a serving cell identifier configured by the network side device, or is determined by a type of the serving cell.

The serving cell identifier includes at least one of the following:
an SCell identifier of the terminal; a PCell identifier of the terminal; and a PSCell identifier of the terminal; and
the type of the serving cell includes at least one of the following:
a PCell; a PSCell; and a special cell.

Optionally, the apparatus further includes:
an obtaining module, configured to obtain the target configuration information, and the target configuration information is used for indicating an association relationship between the first bit block and the at least one serving cell of the terminal.

Optionally, the target control signaling includes a second bit block, and the second bit block includes one bit or a plurality of continuous bits.

Each bit in the second bit block is associated with one serving cell of the terminal, the second bit block is configured to indicate whether the associated serving cell enters the network energy-saving state or not; and the association relationship between each bit in the second bit block and the serving cell is predefined by a protocol or configured at the network side.

Optionally, the apparatus further includes:
a third determining module, configured to determine the association relationship between each bit in the second bit block and the serving cell of the terminal according to at least one of whether dual connectivity (DC) is configured or not, whether a CHO configuration related to network energy-saving is configured or not, the type of the serving cell, the size of the serving cell identifier, and whether a network energy-saving feature is configured for the serving cell or not.

Optionally, the apparatus further includes a fourth determining module, configured for at least one of the following:
determining that the PCell of the terminal enters the network energy-saving state in a case that the target control signaling carries a first group identifier associated with the terminal; and
determining that the PSCell of the terminal enters the network energy-saving state in a case that the target control signaling carries a second group identifier associated with the terminal.

The first group identifier or the second group identifier is configured at the network side.

Optionally, in a case that the target control signaling meets the target condition, and the first operation includes CHO execution, the first determining module is specifically configured to execute CHO if it is determined that a CHO execution condition is met;
or
in a case that the target control signaling meets the target condition, and the first operation includes CPC execution, the first determining module is specifically configured to execute CPC if it is determined that a CPC execution condition is met.

Optionally, configuration information for DC of the terminal and configuration information for CHO related to network energy-saving are not allowed to be configured simultaneously.

Optionally, the apparatus further includes:
an execution module, configured to execute a second operation in a case that the terminal receives first configuration information sent by the network side device, and the terminal receives second configuration information sent by the network side device.

The second operation includes at least one of the following:
determining that the second configuration information does not take effect; and
determining that the reconfiguration fails.

The first configuration information is configuration information for DC, and the second configuration information is configuration information for CHO related to network energy-saving; or the first configuration information is configuration information for CHO related to network energy-saving, and the second configuration information is configuration information for DC.

The operation execution apparatus in the embodiments of the present application may be an electronic device, for example, an electronic device with an operating system, or may be a component in an electronic device, for example, an integrated circuit or a chip. The electronic device may be a terminal, or may be another device other than a terminal. Exemplarily, the terminal may include, but is not limited to types of the terminal 11 listed above. Another device may be a server, a network attached storage (Network Attached Storage, NAS), etc. This is not specifically limited in the embodiments of the present application.

The operation execution apparatus provided by the embodiments of the present application can implement each process implemented by the method embodiments shown in FIG. 2 and achieve the same technical effects. To avoid repetition, details are not described herein again.

Referring to FIG. 5, FIG. 5 is a schematic structural diagram of an operation execution apparatus provided by an embodiment of the present application. The terminal includes the operation execution apparatus. As shown in FIG. 5, the operation execution apparatus 400 includes:
a sending module 401, configured to send target control signaling to a terminal.

In a case that the target control signaling meets a target condition, the target control signaling is used for determining to execute a first operation.

The first operation includes at least one of the following:
a conditional handover (CHO) operation;
a conditional primary secondary cell (PSCell) change (CPC) operation; and
a secondary cell (SCell) deactivation operation.

Optionally, the CHO operation includes at least one of the following:
CHO execution; CHO evaluation; first CHO execution condition enabling; and CHO measurement;
   or
the CPC operation includes at least one of the following:
   CPC execution; CPC evaluation; first CPC execution condition enabling; and CPC measurement;
   the first CHO execution condition is a CHO execution condition used by the terminal in a case that a primary cell (PCell) enters a network energy-saving state; and
   the first CPC execution condition is a CPC execution condition used by the terminal in a case that a primary secondary cell (PSCell) enters a network energy-saving state.

Optionally, the target control signaling is L1 group common signaling, and the target control signaling is scrambled through a first radio network temporary identifier (RNTI).

Optionally, the target control signaling is used for indicating whether at least one serving cell of the terminal enters the network energy-saving state or not, or the target control signaling is used for indicating whether the terminal executes the first operation or not.

Optionally, the apparatus further includes:
an execution module, configured to execute a third operation in a case that the network side device sends first configuration information to the terminal.

The third operation includes at least one of the following:
it is determined not to configure second configuration information to the terminal; and
in a case that the network side device determines to configure the second configuration information to the terminal, a deconfiguration operation is executed on the terminal. The deconfiguration operation is used for deconfiguring the first configuration information.

The first configuration information is configuration information for DC, and the second configuration information is configuration information for CHO related to network energy-saving; or the first configuration information is configuration information for CHO related to network energy-saving, and the second configuration information is configuration information for DC.

The operation execution apparatus in the embodiments of the present application may be an electronic device, for example, an electronic device with an operating system, or may be a component in an electronic device, for example, an integrated circuit or a chip. The electronic device may be a terminal, or may be another device other than a terminal. Exemplarily, the terminal may include, but is not limited to types of the terminal 11 listed above. Another device may be a server, a network attached storage (Network Attached Storage, NAS), etc. This is not specifically limited in the embodiments of the present application.

The operation execution apparatus provided by the embodiments of the present application can implement each process implemented by the method embodiments shown in FIG. 3 and achieve the same technical effects. To avoid repetition, details are not described herein again.

Optionally, as shown in FIG. 6, an embodiment of the present application further provides a communication device 500, including a processor 501 and a memory 502. The memory 502 stores a program or an instruction capable of running on the processor 501. For example, in a case that the communication device 500 is a terminal, each step of the operation execution method embodiments applied to the terminal may be performed when the program or the instruction is executed by the processor 501, and the same technical effect can be achieved. To avoid repetition, details are not described herein again. In a case that the communication device 500 is a network side device, when the program or the instruction is executed by the processor 501, each step of the operation execution method embodiments applied to the network side device is performed, and the same technical effect can be achieved. To avoid repetition, details are not described herein again.

An embodiment of the present application further provides a terminal, including a processor and a communication interface. The communication interface is coupled to the processor, and the processor is configured to run a program or an instruction to implement the steps in the method embodiment shown in FIG. 5. The terminal embodiment corresponds to the terminal side method embodiment. Each implementation process and each implementation of the method embodiments are applicable applied to the terminal embodiments and can achieve the same technical effect.

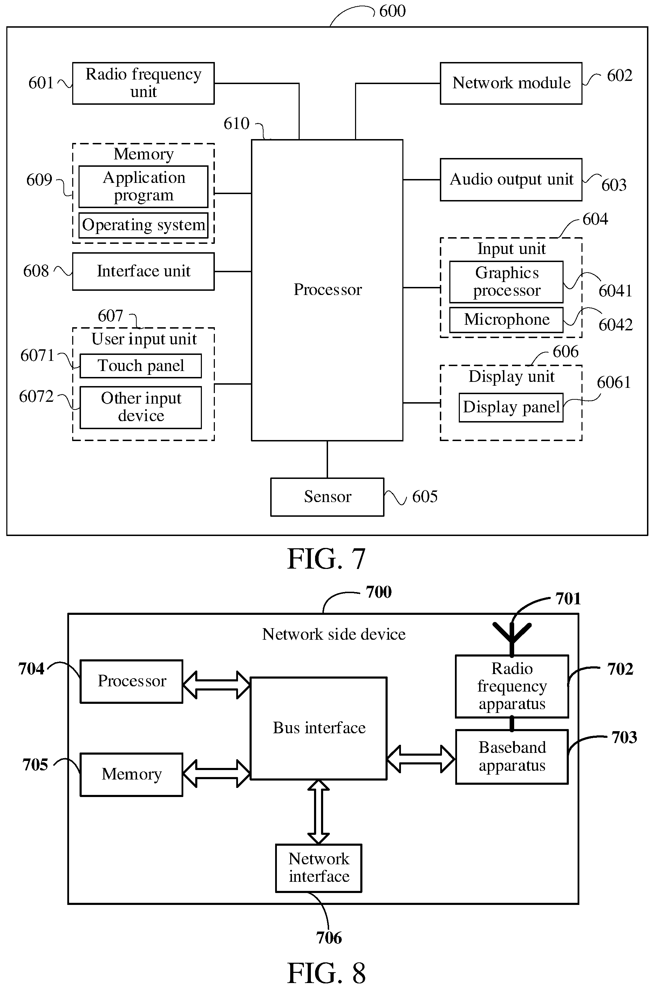

Specifically, FIG. 7 is a schematic structural diagram of hardware of a terminal in an embodiment of the present application.

The terminal 600 includes but is not limited to at least some components of a radio frequency unit 601, a network module 602, an audio output unit 603, an input unit 604, a sensor 605, a display unit 606, a user input unit 607, an interface unit 608, a memory 609, a processor 610, etc.

A person skilled in the art may understand that the terminal 600 may further include a power supply (for example, a battery) for supplying power to each component. The power supply may be logically connected to the processor 610 by a power management system to implement functions such as charging and discharging management, and power consumption management through the power management system. The structure of the terminal shown in FIG. 7 does not constitute any limitation to the terminal, and the terminal may include more or fewer components than shown, or may combine some components, or have different component arrangements. Details are not described herein again.

It should be understood that in the embodiments of the present application, the input unit 604 may include a graphics processing unit (Graphics Processing Unit, GPU) 6041 and a microphone 6042. The GPU 6041 processes image data of a still picture or video acquired by an image capture apparatus (for example, a camera) in a video capture mode or an image capture mode. The display unit 606 may include a display panel 6061. The display panel 6061 may be configured by using a liquid crystal display, an organic light-emitting diode, etc. The user input unit 607 includes at least one of a touch panel 6071 and another input device 6072. The touch panel 6071 is also referred to as a touchscreen. The touch panel 6071 may include two parts: a touch detection apparatus and a touch controller. Another input device 6072 may include, but is not limited to a physical keyboard, a functional key (such as a volume control key or a switch key), a track ball, a mouse, and a joystick. Details are not described herein again.

In the embodiments of the present application, after receiving downlink data from the network side device, the radio frequency unit 601 may transmit the data to the processor 610 for processing. In addition, the radio frequency unit 601 may send uplink data to the network side device. Generally, the radio frequency unit 601 includes, but is not limited to an antenna, an amplifier, a transceiver, a coupler, a low-noise amplifier, a duplexer, etc.

The memory 609 may be configured to store a software program or an instruction and various data. The memory 609 may mainly include a first storage area for storing the program or the instruction and a second storage area for storing data. The first storage area may store the operating system, an application program or instruction (for example, a voice playing function, an image playing function) required for at least one function, etc. Moreover, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 609 in the embodiments of the present application includes, but is not limited to these memories and any other memories of suitable types.

The processor 610 may include one or more processing units. Optionally, the processor 610 may integrate an application processor and a modem processor. The application processor mainly processes operations about an operating system, a user interface, an application program, etc. The modem processor mainly processes a wireless communication signal, and is, for example, a baseband processor. It may be understood that the modem processor may not be integrated into the processor 610.

The radio frequency unit 601 is configured to receive target control signaling sent by a network side device.

The processor 610 is configured to determine to execute a first operation in a case that the target control signaling meets a target condition.

The first operation includes at least one of the following:
a conditional handover (CHO) operation;
a conditional primary secondary cell (PSCell) change (CPC) operation; and
a secondary cell (SCell) deactivation operation.

Optionally, the CHO operation includes at least one of the following:
CHO execution; CHO evaluation; first CHO execution condition enabling; and CHO measurement;
   or
the CPC operation includes at least one of the following:
   CPC execution; CPC evaluation; first CPC execution condition enabling; and CPC measurement;
   the first CHO execution condition is a CHO execution condition used by the terminal in a case that a primary cell (PCell) enters a network energy-saving state; and
   the first CPC execution condition is a CPC execution condition used by the terminal in a case that a primary secondary cell (PSCell) enters a network energy-saving state.

Optionally, the target control signaling is L1 group common signaling, and the target control signaling is scrambled through a first radio network temporary identifier (RNTI).

Optionally, the target control signaling is used for indicating whether at least one serving cell of the terminal enters the network energy-saving state or not, or the target control signaling is used for indicating whether the terminal executes the first operation or not.

Optionally, the indicating whether at least one serving cell of the terminal enters the network energy-saving state or not includes at least one of the following:
indicating whether the PCell of the terminal enters the network energy-saving state or not;
indicating whether the PSCell of the terminal enters the network energy-saving state or not; and
indicating whether at least one SCell of the terminal enters the network energy-saving state or not.

Optionally, the processor 610 is specifically configured for at least one of the following:
in a case of determining that the PCell of the terminal enters the network energy-saving state according to the target control signaling, determining to execute the CHO operation;
in a case of determining that the PSCell of the terminal enters the network energy-saving state according to the target control signaling, determining to execute the CPC operation; and
in a case of determining that the SCell of the terminal enters the network energy-saving state according to the target control signaling, determining to execute the SCell deactivation operation.

Optionally, the processor 610 is specifically configured for:
receiving, through a first serving cell, target control signaling sent by the network side device.

The processor 610 is further configured for at least one of the following:
determining the first serving cell as a serving cell entering the network energy-saving state;
determining a special cell (SpCell) corresponding to a cell group where the first serving cell is located as a serving cell entering the network energy-saving state; and
determining a serving cell associated with the first serving cell as a serving cell entering the network energy-saving state.

Optionally, the target control signaling includes at least one first bit block, the first bit block is determined by a first start position and a bit block length, each first bit block is associated with at least one serving cell of the terminal, and the first bit block is configured to indicate whether the associated serving cell enters the network energy-saving state or not.

Optionally, the first start position is configured at a network side, or the bit block length is configured at the network side or agreed upon by a protocol.

Optionally, the serving cell corresponding to the first bit block is determined through a serving cell identifier configured by the network side device, or is determined by a type of the serving cell.

The serving cell identifier includes at least one of the following:
an SCell identifier of the terminal; a PCell identifier of the terminal; and a PSCell identifier of the terminal; and
the type of the serving cell includes at least one of the following:
a PCell; a PSCell; and a special cell.

Optionally, the processor 610 is further configured to:
obtain target configuration information. The target configuration information is used for indicating an association relationship between the first bit block and the at least one serving cell of the terminal.

Optionally, the target control signaling includes a second bit block, and the second bit block includes one bit or a plurality of continuous bits.

Each bit in the second bit block is associated with one serving cell of the terminal, the second bit block is configured to indicate whether the associated serving cell enters the network energy-saving state or not; and the association relationship between each bit in the second bit block and the serving cell is predefined by a protocol or configured at the network side.

Optionally, the processor 610 is further configured to determine the association relationship between each bit in the second bit block and the serving cell of the terminal according to at least one of whether dual connectivity (DC) is configured or not, whether a CHO configuration related to network energy-saving is configured or not, the type of the serving cell, the size of the serving cell identifier, and whether a network energy-saving feature is configured for the serving cell or not.

Optionally, the processor 610 is further configured for at least one of the following:
determining that the PCell of the terminal enters the network energy-saving state in a case that the target control signaling carries a first group identifier associated with the terminal; and
determining that the PSCell of the terminal enters the network energy-saving state in a case that the target control signaling carries a second group identifier associated with the terminal.

The first group identifier or the second group identifier is configured at the network side.

Optionally, in a case that the target control signaling meets the target condition, and the first operation includes CHO execution, the processor 610 is specifically configured to execute CHO if it is determined that a CHO execution condition is met;
or
in a case that the target control signaling meets the target condition, and the first operation includes CPC execution, the processor 610 is specifically configured to execute CPC if it is determined that a CPC execution condition is met.

Optionally, configuration information for DC of the terminal and configuration information for CHO related to network energy-saving are not allowed to be configured simultaneously.

Optionally, the processor 610 is further configured to execute a second operation in a case that the terminal receives first configuration information sent by the network side device, and the terminal receives second configuration information sent by the network side device.

The second operation includes at least one of the following:
determining that the second configuration information does not take effect; and
determining that the reconfiguration fails.

The first configuration information is the configuration information for DC, and the second configuration information is the configuration information for CHO related to network energy-saving; or the first configuration information is the configuration information for CHO related to network energy-saving, and the second configuration information is the configuration information for DC.

It may be understood that for the implementation process of each implementation mentioned in this embodiment, reference may be made to the relevant description in FIG. 3 of the method embodiments, and the same or corresponding technical effects can be achieved. To avoid repetition, details are not described herein again.

Specifically, the terminal according to the embodiments of the present application further include an instruction or program stored on the memory 609 and capable of running on the processor 610. The processor 610 calls the instruction or program in the memory 609 to execute the method executed by each module shown in FIG. 4, and the same technical effect can be achieved. To avoid repetition, details are not described herein again.

An embodiment of the present application further provides a network side device, including a processor and a communication interface. The communication interface is coupled to the processor, and the processor is configured to run a program or an instruction to implement the steps in the method embodiment shown in FIG. 3. The network side device embodiment corresponds to the operation execution method embodiment applied to the network side device. Each implementation process and each implementation of the method embodiments may be applied to the network side device embodiments and can achieve the same technical effect.

Specifically, an embodiment of the present application further provides a network side device. As shown in FIG. 8, the network side device 700 includes: an antenna 701, a radio frequency apparatus 702, a baseband apparatus 703, a processor 704, and a memory 705. The antenna 701 is connected with the radio frequency apparatus 702. In an uplink direction, the radio frequency apparatus 702 receives information from the antenna 701, and sends the received information to the baseband apparatus 703 to be processed. In a downlink direction, the baseband apparatus 703 processes information to be sent, and sends the information to the radio frequency apparatus 702, and the radio frequency apparatus 702 processes the received information and then sends the processed information through the antenna 701.

The method implemented by the network side device in the embodiments above may be implemented in the baseband apparatus 703. The baseband apparatus 703 includes a baseband processor.

The baseband apparatus 703, for example, may include at least one baseband board. A plurality of chips are disposed on the baseband board. As shown in FIG. 8, one chip, for example, a baseband processor, is connected with the memory 705 through a bus interface to call a program in the memory 705 for executing the network device operation shown in the method embodiments.

The network side device may further include a network interface 706. The interface, for example, is a common public radio interface (Common Public Radio Interface, CPRI).

Specifically, the network side device 700 according to the embodiments of the present application further include an instruction or program stored on the memory 705 and capable of running on the processor 704. The processor 704 calls the instruction or program in the memory 705 to execute the method executed by each module shown in FIG. 5, and the same technical effect may be achieved. To avoid repetition, details are not described herein again.

An embodiment of the present application further provides a readable storage medium. The readable storage medium stores a program or an instruction. When the program or the instruction is executed by a processor, each process of the above embodiment of the operation execution method is performed, and the same technical effects can be achieved.

The processor may be a processor in the terminal in above embodiments. The readable storage medium includes a computer-readable storage medium, such as a computer read-only memory (ROM), a random access memory (RAM), a magnetic disc, an optical disc, etc. In some examples, the readable storage medium may be a non-volatile readable storage medium.

An embodiment of the present application further provides a chip. The chip includes a processor and a communication interface, the communication interface is coupled to the processor, and the processor is configured to run a program or an instruction to implement each process of the above embodiments of the operation execution method, and the same technical effects may be achieved. To avoid repetition, details are not described herein again.

It should be understood that the chip mentioned in the embodiments of the present application may also be referred to as an Soc, a system chip, a chip system, a system-on-chip, etc.

An embodiment of the present application further provides a computer program/program product, the computer program/program product is stored in a storage medium, and the computer program/program product is executed by at least one processor to implement each process of the above operation execution method embodiments, and the same technical effects can be achieved. To avoid repetition, details are not described herein again.

An embodiment of the present application further provides an operation execution system, including: a terminal and a network side device. The terminal may be configured to execute the steps of the above operation execution method applied to the terminal. The network side device may be configured to execute the steps of the above operation execution method applied to the network side device.

It should be noted that, terms "include", "comprise", or any other variation thereof herein are intended to cover a non-exclusive inclusion, so that a process, a method, an object, or an apparatus including a series of elements not only includes those elements but also includes other elements which are not clearly listed or further includes intrinsic elements of the process, the method, the object, or the apparatus. Without more limitations, an element defined by a sentence "including one" does not exclude a case that there are still other same elements in the process, the method, the object, or the apparatus including the element. In addition, it should be pointed out that the scope of the method and apparatus in the implementation of the present application is not limited to execution of functions in a shown or discussed order, and may further include execution of functions involved in a substantially simultaneous manner or in a reverse order. For example, the described method may be executed in an order different from the described order, and various steps may be added, omitted, or combined. Moreover, features described with the reference to some examples may be combined in other examples.

Through the above descriptions on the implementations, those skilled in the art may clearly know that each embodiment method may be realized with the help of a computer software product and a necessary universal hardware platform, and certainly may be realized through hardware. The computer software product is stored in a storage medium (for example, a ROM, a RAM, a magnetic disk, or an optical disc), and includes several instructions, to enable a terminal or a network side device to implement the methods in the embodiments of the present application.

The embodiments of the present application are described above with the reference to the accompanying drawings, but the present application is not limited to the above specific implementations. The above specific implementations are merely illustrative rather than restrictive. Inspired by the present application, those of ordinary skill in the art may still make implementations in multiple forms without departing from the essence of the present application and the protection scope of the claims, and these implementations all fall within the protection of the present application.

## Claims

1. An operation execution method, comprising:
receiving, by a terminal, target control signaling sent by a network side device; and
determining, by the terminal, to execute a first operation in a case that the target control signaling meets a target condition, wherein
the first operation comprises at least one of the following:
a conditional handover (CHO) operation;
a conditional primary secondary cell (PSCell) change (CPC) operation; and
a secondary cell (SCell) deactivation operation.

2. The method according to claim 1, wherein the CHO operation comprises at least one of the following:
CHO execution; CHO evaluation; first CHO execution condition enabling; and CHO measurement;
or
the CPC operation comprises at least one of the following:
CPC execution; CPC evaluation; first CPC execution condition enabling; and CPC measurement;
the first CHO execution condition is a CHO execution condition used by the terminal in a case that a primary cell (PCell) enters a network energy-saving state; and
the first CPC execution condition is a CPC execution condition used by the terminal in a case that a primary secondary cell (PSCell) enters a network energy-saving state.

3. The method according to claim 1 or 2, wherein the target control signaling is L1 group common signaling, and the target control signaling is scrambled through a first radio network temporary identifier (RNTI).

4. The method according to any one of claims 1 to 3, wherein the target control signaling is used for indicating whether at least one serving cell of the terminal enters the network energy-saving state or not, or the target control signaling is used for indicating whether the terminal executes the first operation or not.

5. The method according to claim 4, wherein the indicating whether at least one serving cell of the terminal enters the network energy-saving state or not comprises at least one of the following:
indicating whether the PCell of the terminal enters the network energy-saving state or not;
indicating whether the PSCell of the terminal enters the network energy-saving state or not; and
indicating whether at least one SCell of the terminal enters the network energy-saving state or not.

6. The method according to claim 5, wherein the determining, by the terminal, to execute a first operation in a case that the target control signaling meets a target condition comprises at least one of the following:
determining, by the terminal, to execute the CHO operation in a case that the terminal determines that the PCell of the terminal enters the network energy-saving state according to the target control signaling;
determining, by the terminal, to execute the CPC operation in a case that the terminal determines that the PSCell of the terminal enters the network energy-saving state according to the target control signaling; and
determining, by the terminal, to execute the SCell deactivation operation in a case that the terminal determines that the SCell of the terminal enters the network energy-saving state according to the target control signaling.

7. The method according to any one of claims 1 to 6, wherein the receiving, by a terminal, target control signaling sent by a network side device comprises:
receiving, by the terminal through a first serving cell, target control signaling sent by the network side device; and
the method further comprises at least one of the following:
determining, by the terminal, the first serving cell as a serving cell entering the network energy-saving state;
determining, by the terminal, a special cell (SpCell) corresponding to a cell group where the first serving cell is located as a serving cell entering the network energy-saving state; and
determining, by the terminal, a serving cell associated with the first serving cell as a serving cell entering the network energy-saving state.

8. The method according to any one of claims 1 to 6, wherein the target control signaling comprises at least one first bit block, the first bit block is determined by a first start position and a bit block length, each first bit block is associated with at least one serving cell of the terminal, and the first bit block is configured to indicate whether the associated serving cell enters the network energy-saving state or not.

9. The method according to claim 8, wherein the first start position is configured at a network side, or the bit block length is configured at the network side or agreed upon by a protocol.

10. The method according to claim 8 or 9, wherein the serving cell corresponding to the first bit block is determined through a serving cell identifier configured by the network side device, or is determined by a type of the serving cell;
the serving cell identifier comprises at least one of the following:
an SCell identifier of the terminal; a PCell identifier of the terminal; and a PSCell identifier of the terminal; and
the type of the serving cell comprises at least one of the following:
a PCell; a PSCell; and a special cell.

11. The method according to any one of claims 8 to 10, further comprising:
obtaining target configuration information by the terminal, wherein the target configuration information is used for indicating an association relationship between the first bit block and at least one serving cell of the terminal.

12. The method according to any one of claims 1 to 11, wherein the target control signaling comprises a second bit block, and the second bit block comprises one bit or a plurality of continuous bits; and
each bit in the second bit block is associated with one serving cell of the terminal, the second bit block is configured to indicate whether the associated serving cell enters the network energy-saving state or not; and the association relationship between each bit in the second bit block and the serving cell is predefined by a protocol or configured at the network side.

13. The method according to claim 12, further comprising:
determining the association relationship between each bit in the second bit block and the serving cell of the terminal by the terminal according to at least one of whether dual connectivity (DC) is configured or not, whether a CHO configuration related to network energy-saving is configured or not, the type of the serving cell, the size of the serving cell identifier, and whether a network energy-saving feature is configured for the serving cell or not.

14. The method according to any one of claims 4 to 13, wherein after the terminal receives the target control signaling sent by the network side device, the method further comprises at least one of the following:
determining, by the terminal, that the PCell of the terminal enters the network energy-saving state in a case that the target control signaling carries a first group identifier associated with the terminal; and
determining, by the terminal, that the PSCell of the terminal enters the network energy-saving state in a case that the target control signaling carries a second group identifier associated with the terminal; and
the first group identifier or the second group identifier is configured at the network side.

15. The method according to any one of claims 1 to 14, wherein the determining, by the terminal, to execute a first operation in a case that the target control signaling meets a target condition, and the first operation comprises CHO execution comprises: if it is determined that a CHO execution condition is met, executing CHO by the terminal;
or
the determining, by the terminal, to execute a first operation in a case that the target control signaling meets a target condition, and the first operation comprises CPC execution comprises: if it is determined that a CPC execution condition is met, executing CPC by the terminal.

16. The method according to any one of claims 1 to 15, wherein configuration information for DC of the terminal and configuration information for CHO related to network energy-saving are not allowed to be configured simultaneously.

17. The method according to any one of claims 1 to 16, further comprising:
in a case that the terminal receives first configuration information sent by the network side device, and the terminal receives second configuration information sent by the network side device, executing a second operation by the terminal, wherein
the second operation comprises at least one of the following:
determining, by the terminal, that the second configuration information does not take effect; and
determining, by the terminal, that the reconfiguration fails;
the first configuration information is the configuration information for DC, and the second configuration information is the configuration information for CHO related to network energy-saving; or the first configuration information is the configuration information for CHO related to network energy-saving, and the second configuration information is the configuration information for DC.

18. An operation execution method, comprising:
sending target control signaling by a network side device to a terminal, wherein
in a case that the target control signaling meets a target condition, the target control signaling is used for determining to execute a first operation;
the first operation comprises at least one of the following:
a conditional handover (CHO) operation;
a conditional primary secondary cell (PSCell) change (CPC) operation; and
a secondary cell (SCell) deactivation operation.

19. The method according to claim 18, wherein the CHO operation comprises at least one of the following:
CHO execution; CHO evaluation; first CHO execution condition enabling; and CHO measurement;
or
the CPC operation comprises at least one of the following:
CPC execution; CPC evaluation; first CPC execution condition enabling; and CPC measurement;
the first CHO execution condition is a CHO execution condition used by the terminal in a case that a primary cell (PCell) enters a network energy-saving state; and
the first CPC execution condition is a CPC execution condition used by the terminal in a case that a primary secondary cell (PSCell) enters a network energy-saving state.

20. The method according to claim 18 or 19, wherein the target control signaling is L1 group common signaling, and the target control signaling is scrambled through a first radio network temporary identifier (RNTI).

21. The method according to any one of claims 18 to 20, wherein the target control signaling is used for indicating whether at least one serving cell of the terminal enters the network energy-saving state or not, or the target control signaling is used for indicating whether the terminal executes the first operation or not.

22. The method according to any one of claims 18 to 21, further comprising:
executing a third operation by the network side device in a case that the network side device sends first configuration information to the terminal, wherein
the third operation comprises at least one of the following:
determining, by the network side device, not to configure second configuration information for the terminal; and
executing a deconfiguration operation on the terminal by the network side device in a case that the network side device determines to configure second configuration information for the terminal; the deconfiguration operation is used for deconfiguring the first configuration information;
the first configuration information is configuration information for DC, and the second configuration information is the configuration information for CHO related to network energy-saving; or the first configuration information is configuration information for CHO related to network energy-saving, and the second configuration information is configuration information for DC.

23. An operation execution apparatus comprised by a terminal, the operation execution apparatus comprising:
a receiving module, configured to receive target control signaling sent by a network side device; and
a first determining module, configured to determine to execute a first operation in a case that the target control signaling meets a target condition, wherein
the first operation comprises at least one of the following:
a conditional handover (CHO) operation;
a conditional primary secondary cell (PSCell) change (CPC) operation; and
a secondary cell (SCell) deactivation operation.

24. An operation execution apparatus comprised by a network side device, the operation execution apparatus comprising:
a sending module, configured to send target control signaling to a terminal; wherein
in a case that the target control signaling meets a target condition, the target control signaling is used for determining to execute a first operation; and
the first operation comprises at least one of the following:
a conditional handover (CHO) operation;
a conditional primary secondary cell (PSCell) change (CPC) operation; and
a secondary cell (SCell) deactivation operation.

25. A terminal, comprising a processor and a memory, wherein the memory stores a program or an instruction executable on the processor, and the program or the instruction, when executed by the processor, implements the steps of the operation execution method according to any one of claims 1 to 17.

26. A network side device, comprising a processor and a memory, wherein the memory stores a program or an instruction executable on the processor, and the program or instruction, when executed by the processor, implements the steps of the operation execution method according to any one of claims 18 to 22.

27. A chip, comprising a processor and a communication interface, wherein the communication interface is coupled to the processor, and the processor is configured to run a program or an instruction to implement the steps of the operation execution method according to any one of claims 1 to 17, or implement the steps of the operation execution method according to any one of claims 18 to 22.

28. A readable storage medium, having a program or an instruction stored thereon, wherein the program or instruction is executed by a processor to implement the steps of the operation execution method according to any one of claims 1 to 17, or implement the steps of the operation execution method according to any one of claims 18 to 22.

29. A computer program product, executed by at least one processor to implement the steps of the operation execution method according to any one of claims 1 to 17, or implement the steps of the operation execution method according to any one of claims 18 to 22.

30. An operation execution apparatus/device, configured to be used for implementing the steps of the operation execution method according to any one of claims 1 to 17, or implement the steps of the operation execution method according to any one of claims 18 claim 22.
